# EUROPEAN PATENT APPLICATION

(11) **EP 0 569 115 A2**
(43) Date of publication of application: **10.11.1993**
(21) Application number: 93301213.0
(22) Date of filing: 18.02.1993
(51) Int. Cl.: G01N 35/02, B04B 5/04

(54) **High throughput DNA preparation system**

(30) Priority: 05.05.1992 US 881750
(71) Applicant: GENERAL ATOMICS, San Diego, California 92121 (US)
(72) Inventor: Garner, Harold R., Encinitas, California 92024 (US)
(74) Representative: Coxon, Philip

(57) **Abstract**

A fully automatic, computer controller, centrifuge-based device for preparing, among other things, DNA, and where the device is connected to and is controlled by a personal computer. The device is suitable for use with microtiter plates and can add and remove liquids to and from the wells, mix liquids in the wells, air dry materials in the well, transfer liquids from well to well and centrifuge the microtiter plates. The device includes, among other thinks a redesigned swinging bucket allowing top access, and a computer controlled, auto-feedback rotor positioning system.

## Description

### TECHNICAL FIELD

The present invention relates to devices for automatic preparation of laboratory materials. More particularly, the present invention relates to devices for high throughput, centrifugation-based nucleic acid separation and purification. The present invention is particularly, but not exclusively, useful for separating and purifying DNA and RNA using a fully automated, computer controlled centrifugation based device.

### BACKGROUND OF THE INVENTION

It is well known that human characteristics and physical structure are dependant on an individual's DNA. All aspects of a persons anatomy are dependant on this DNA. More recently, it has been determined that certain DNA structures result in not only diseases, but also a susceptibility to contract certain diseases and sicknesses. To further investigate DNA structures and to discover preventative or corrective manipulations of human DNA, the Human Genome Project, was begun.

The human genome project is placing demands on technology that have not been experienced by biologists before. Specifically, the number of samples to be manipulated is orders of magnitude greater than for any previous project. The human genome project will involve manipulating thousands of cloned DNA fragments. Constructing a physical map of an average sized human chromosome will require detailed analysis of 4000 to 20,000 cosmid clones of 40kb. Determining the DNA sequence of a chromosome, if done using conventional techniques will require the analysis of tens of thousands of DNA sequencing templates (DNA fragments) of several hundred bases. For instance, if the 150mb chromosome 11 was fragmented into 400b DNA sequencing templates, over 300,000 such DNA fragments would be required.

Since beginning the human genome project, it has become clear there are several major steps that will be rate limiting. These steps include *in situ* hybridization, restriction analysis of individual cosmids and large scale analysis of DNA samples by polymerase chain reactions (PCR). The most important application of this technique is screening yeast artificial chromosome (YAC) libraries for positive clones corresponding to specific sequence tag site (STS) sequences. Other rate limiting steps include preparing DNA sequencing templates, assembling sequencing reactions and sequencing DNA clones. These steps are typical for a human genome project research laboratory and all require front-end DNA preparation which further limits the rates of these steps. Accordingly, if the rate of DNA preparation could be increased, the rates for accomplishing these steps could likewise be increased.

The standard protocol for DNA preparation is known as the alkaline lysis method or mini-prep. Several versions of this protocol have been published. Generally, a representative example of the types of protocols which may be implemented on the present invention is the following plasmid alkaline lysis protocol:
1) Transfer 1 Ml of an overnight culture to a 1.7 Ml epindorf tube.
2) Centrifuge at 10,500 g for 30 seconds.
3) Aspirate media, then resuspend the cell pellet in 100 µL of ice cold Solution I (50 Mm Glucose, 25 Mm Tris-Cl Ph 8, 10 Mm EDTA Ph 8) by vortexing for 10 seconds.
4) Add 200 µL of room temperature Solution II (0.2 N NaOH, 1% SDS) and mix by inverting several times.
5) Add 150 of ice cold Solution III (3 M Potassium, 5 M Acetate) and mix by inverting and shaking for 10 seconds.
6) Incubate on ice for 3 minutes.
7) Centrifuge at 10,500 g for 5 minutes at 4° C.
8) Transfer liquid to a fresh tube, then precipitate the DNA by addition of 900 µL of 100% EtOH at room temperature.
9) Vortex for 5 minutes.
10) Incubate at room temperature for 2 minutes.
11) Centrifuge at 10,500 g for 5 minutes at 4° C.
12) Remove EtOH by vacuum aspiration.
13) Wash pellet by adding 1 Ml of 70% EtOH.
14) Remove EtOH by vacuum aspiration.
15) Air dry pellet for 10 minutes.
16) Resuspend DNA in 50 µL T₁₀E₁ Ph 8.
17) Incubate at room temperature for 30 minutes.

The drawback of the various alkaline lysis protocols like the foregoing is that they cannot be implemented directly on an automated system designed for high throughput operation. This is because these protocols are too complex, or operate in centrifugation regimes that do not allow the use of microtiter plates for sample handling. Microtiter plates are the vessel of choice because of their superior capacities and handling characteristics. Moreover, as can be seen from the foregoing protocol, another reason why the existing protocol does not lend itself to automation is that some of the solutions and steps are at room temperature, while others are ice cold. The ice cold incubation step (step 6) for example would require that the vessel be moved to a refrigerated area and then returned to room temperature. This necessitates complex manipulation of the vessel by the robotic system, or human intervention. Naturally, the equipment itself would be more complex in that it would need to include a cold storage location for not only the vessels, but also the solutions which must be ice cold when added. Still further, Step 7, which requires centrifugation at ice cold temperatures requires a second centrifuge which is kept at the 4° C ice cold temperature. Clearly this complicates the equipment requirements. Yet another problem is that the centrifugation in steps 2, 7 and 11 is at 10,500 g. This force requires the use of heavily reinforced swinging buckets because as the rotor is being rotated, the forces acting in the buckets are severe. More specifically, when the buckets are being rotated, they are allowed to swing outward. As the rotation speed increases, the forces acting on the buckets increases proportionally. These forces are acting on the buckets in a direction which is generally into the recess of the bucket and perpendicular to the base of the bucket. As the force is acting on the base of the bucket, the force is transferred to the wall members and tends to try to deform the wall members inward. At extremely high speeds such as when achieving 10,500g, the deformation can be so severe that the brackets on the swinging bucket which are holding the bucket on the rotor slide off the ends of the rotor. This occurrence will at a minimum damage the centrifuge, and can easily injure individuals in proximity to the centrifuge. To avoid the deformation in the past, manufacturers of swinging buckets have placed a crossbar between the two walls supporting the brackets. In this manner, those walls are prevented from deforming inward, and the brackets cannot slide off the ends of the rotor. The resulting bucket, which includes a crossbar, has significant drawbacks. First, typical swinging buckets, such as those manufactured by Beckman Instruments, cannot accommodate the deep well microtiter plates that are preferably used in some DNA preparation. This is the result of insufficient clearance between the side walls and the crossbar. Moreover, placement of the crossbar is across the center of the bucket between the bucket side wall brackets. This placement prevents top access which is access to the bucket recess from a direction perpendicular to the base of the bucket. This is the second drawback as it is this direction of access most easily accomplished by robotic means. Absent top access, an extremely complex series of motions is required to maneuver the microtiter plate between the side wall and the crossbar. This complex movement, while possible manually, is difficult if not impossible by robotic means. Past attempts to develop swinging buckets which don't incorporate a crossbar have resulted in heavily reinforced buckets which, as a result of their increased weight, have reduced carrying capacities. Reducing the carrying capacity again hinders high throughput processing. Another drawback of the crossbar type swinging bucket is that they cannot be operated at any force approaching 10,000 g. Generally, even crossbar type swinging buckets will self destruct before reaching 5,000 g. As a result, for automatic high throughput processing such as for DNA preparation, there is the need for a swinging bucket which does not incorporate a crossbar, permits top access and is capable of carrying standard size and weight deep well microtiter plates.

Despite the foregoing, some automated methods have been developed based on the basic alkaline lysis method, but the results have not been satisfactory. Generally the automated methods, while accomplishing DNA preparation, cannot be scaled up to meet the demands of the human genome project discussed above. These systems cannot achieve the required throughput because they process the samples in microfuge tubes, rather than the microtiter plates. One partially automated system developed by the Biomek Corporation uses microtiter plates for sample handling, but its operation requires manual intervention for the centrifugation steps. Again, this manual intervention significantly hinders the amount and rate of throughput.

In light of the above, it is an object of the present invention to provide a high throughput nucleic acid preparation device. Another object of the present invention to provide a device which is fully automated. Yet another object is to provide a device which is simple, rapid, and reliable for use in DNA and RNA preparation. Still another object of the present invention is to provide a device which uses microtiter plates for sample handling. And yet another object of the present invention is to provide a centrifuge based device incorporating improved swinging buckets that allow placement and removal of microtiter plates from above the bucket, and more specifically, placement and removal by robotic means. Another object of the present invention is to provide a centrifuge based device which incorporates a sensing device to automatically locate and position the bucket rotor. Yet another object is to provide a device which can automatically perform a modified DNA or RNA preparation protocol based on the alkaline lysis method. And yet another object of the present invention is to provide a centrifugation based device which can perform DNA or RNA preparation from cosmid, plasmid and yeast cultures. Still another object of the present invention is to provide a high throughput DNA preparation device which is relatively easy to manufacture and is comparatively economical.

### SUMMARY OF THE INVENTION

In a first aspect, the invention provides an automated device for preparation of laboratory materials which is characterised by comprising:
a centrifuge having a swinging bucket rotor, said rotor engaging a plurality of swinging buckets containing said materials for centrifuging;
a means for manipulating said materials, said centrifuge and said swinging buckets, said means for manipulating being controlled by a computer;
an automatic feedback means for positioning said swinging bucket rotor to enable manipulation of said materials by said means for manipulating.
In a further aspect, the invention provides, an automated device for preparation of laboratory materials comprising:
a centrifuge having a swinging bucket rotor;
a swinging bucket for holding a microtiter plate said swinging bucket having a rectangular recess established by a base and first, second, third and fourth upstanding side wall members, said wall members being substantially perpendicular to said base, said swinging bucket having a means for hanging said swinging bucket on said swinging bucket rotor, said hanging means being attached to said first and third wall members, said first and third wall members being on opposite sides of said recess, and said hanging means preventing disengagement of said bucket from said rotor by preventing deformation of said first and third wall members, and said hanging means allowing placement of said microtiter plates into said rectangular recess along an axis perpendicular to said rectangular base; and
a means for manipulating said materials, said centrifuge and said swinging bucket, said means for manipulating being controlled by a computer.

A preferred embodiment of the invention provides fully automatic, computer controlled, centrifuge-based device for preparing, among other things, DNA, which is connected to a personal computer and the computer controlling all functions and manipulations of the device. The centrifuge in the device has a swinging bucket rotor which holds swinging buckets containing the materials to be centrifuged. During centrifugation, the materials are held in a deep well microtiter plate. The microtiter plate is placed in and removed from the swinging bucket of the centrifuge by a computer controlled gripper which reaches into the bucket from the top. Accordingly, the bucket cannot include a crossbar. The buckets are substantially box-shaped and have a base which is bounded by side walls. Two of the opposing side walls extend further away from the base than the other two side walls. Each of the two extended side walls includes a U-shaped bracket to engage the centrifuge rotor. The U-shaped brackets are formed onto the outsides of the extended side walls and includes a recess which is established between the side wall and a lip portion on the outside of the bracket. The recesses and lips on a bucket are sized and shaped to engage a pair of pins on the arm of the rotor. The cooperative engagement is such that the bucket can swing freely while connected to the rotor. The lip portions engage corresponding lips or knobs on the rotor pins. This lip engagement ensures that the bucket side walls won't inwardly deform during centrifugation without restricting the swinging motion of the bucket and without the use of a crossbar. In this manner, the brackets on the swinging buckets of the present invention serve the dual purpose of swingingly attaching the bucket to the rotor while preventing the potentially disastrous inward deformation of the side walls.

The device of the present invention also includes a photo-electric sensor which signals the computer when the rotor is in a particular orientation. From this known orientation the computer can then rotate the rotor into the required alignments allowing the gripper to place and remove the microtiter plates. The photo-electric sensor is separated from the centrifuge by a support member. The sensor includes a lightsource which is aimed at the rotor below. The rotor has, attached to one of its arms, a mirror. When the mirror on the rotor is in the light path of the light source, the light is reflected upward toward the sensor and the sensor then signals the computer that the rotor is in the known orientation. Knowing the orientation of the rotor, the computer is able to determine what rotation of the rotor will be required to position the various buckets.

Preferably, the device includes a motor drive to rotate the rotor into the desired alignments. This rotor is connected to the support member and can engage the rotor to slowly turn the rotor until the mirror is in the light path or until a particular bucket is in position. The motor drive, and an actuator which engages the motor drive with the rotor, are controlled by the computer.

Additionally, the device has the ability to place and remove the microtiter plates from the buckets through the use of a computer controlled robotic gripper. Moreover, the device can add and remove liquids to and from wells in the microtiter plates. Still further it can mix the contents of the wells. Adding and removing liquids is accomplished by a series of nozzles connected to pumps and storage bottles. The pumps can pump liquids between the wells and the storage bottles. Additionally, the pumps or an additional air dryer can be used to blow air into the wells to achieve air drying. A pipetting tool is also attached to the device and is used to transfer liquids from one well to another and to accomplish mixing within a well in the microtiter plate.

The gripper noted above, can move the microtiter plates vertically. Horizontal movement is accomplished by placing the microtiter plates on the lid of centrifuge which is connected to a motor drive. When centrifuging, the lid covers the centrifuge opening. On the other hand if the microtiter plates need to be accessed by the gripper, the lid is moved horizontally to expose the microtiter plates. The gripper can then remove a microtiter plate and lift it above the lid. The lid is then moved horizontally again until the plate is above a reserved storage location on the lid surface where the gripper then places the plate. The lid can also be moved to position the plate below either the nozzles or the pipetting tool. Once a plate is in position, the nozzles or the pipetting tool can be lowered into the wells to perform their functions.

Other locations on the lid are reserved for a tip washing station and a tip storage station. By moving the lid, these locations can be placed beneath either the pipetting tool or the nozzles. All of the lid movements as well as the movements and functions of the pipetting tool and nozzles are controlled by the computer.

In this manner, the computer can be programmed to add or remove liquids to the wells, dry material in the wells, mix the contents of the wells, and centrifuge the plates, etc.

While some methods may be performed by the device of the present invention without modification, complex methodologies such as DNA preparation must often be modified to use the device. Accordingly, a modified protocol for DNA preparation by the alkaline lysis method is also provided. This protocol is modified to allow automatic performance by the present device. Specifically, centrifugation is accomplished at as little as one-tenth the force previously believed to be required. Moreover, the entire process is performed at room temperature and the solutions, some of which are now combined prior to use, are also used at room temperature.

The novel features of this invention, as well as the invention itself, both as to its structure and its operation will be best understood from the accompanying drawings, taken in conjunction with the following description, in which similar reference characters refer to similar parts, and in which:

### BRIEF DESCRIPTION OF THE DRAWINGS

FIG. 1 is a perspective view of the centrifuge-based device of the present invention.

FIG. 2 is a partial cutaway side view of the centrifuge-based device of the present invention.

FIG. 3 is a perspective view of the swinging bucket used with the centrifuge-based device of the present invention.

FIG. 4 is a cross-sectional view of the swinging bucket used with the centrifuge-based device of the present invention.

### DESCRIPTION OF PREFERRED EMBODIMENTS

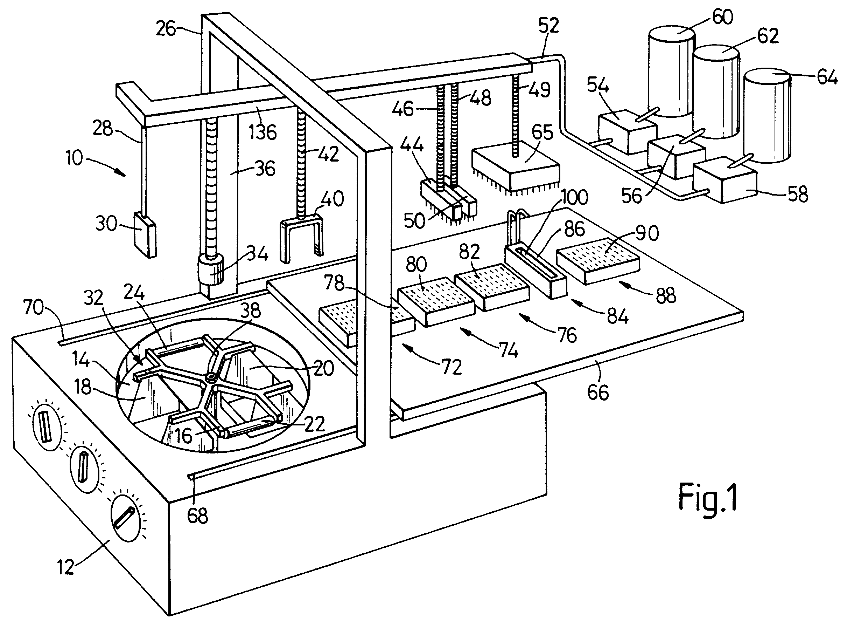

Referring initially to FIG. 1, the centrifuge-based device of the present invention is shown and generally designated 10. The primary component of the device is the centrifuge 12. The centrifuge 12 is well known and can be manufactured by any of a number of manufacturers. One representative centrifuge would be a Beckman GPR, although others, if able to handle swinging buckets, would suffice as well. A centrifuge well 14 is located on the upper surface of the centrifuge 12. In the well 14 there is a swinging bucket rotor 16 which can hold from one to four swinging buckets. In FIG. 1, the rotor 16 is shown holding swinging bucket 18 and swinging bucket 20. The two other bucket locations are occupied by bracing weights 22 and 24. Bracing weights are used to balance the rotor when less than a full compliment of buckets is being centrifuged. As can be appreciated by those in the art, additional buckets could be attached to the rotor replacing weights 22 and 24. This would provide additional capacity and higher throughput.

Attached to centrifuge 12 is a support member 26 which supports a number of tools or other items. One item attached to the support member 26 is a rod 28 which holds a photo-electric sensor 30. Sensor 30 has a light source which is aimed toward the rotor 16. Attached to the rotor 16 is a mirror 32. Mirror 32 is for reflecting the light from the sensor 30 back to the sensor 30. Experimentation has found that a 2 mm by 2mm mirror is sufficient, although other sizes would work as well. As those skilled in the art will appreciate, the foregoing lightsensor/mirror system could be replaced with an encoded shaft sensor, installed in the centrifuge, to sense the orientation of the rotor shaft. Suitable shaft sensors are well known in the art and are commercially available.

A rotator 34 is attached to the distal end of actuator 36 which is in turn connected to support member 26. Rotator 34 includes a motor drive for rotating the rotor and a recess sized to engage a nut 38 on the rotor 16. Gripper 40 is connected to support member 26 by actuator 42. Gripper 40 is a two-prong gripper where the spacing between the prongs can be varied to constrict upon and grip items such as a microtiter plate. The prong spacing can be varied using a pneumatic actuator like those manufactured by PhD Inc. or any other computer controlled drive.

Another tool attached to the support member is the pipetting tool 44 which is attached by actuator 46 to the support member 26. A suitable pipetting tool for use with 96 well microtiter plates is the eight channel pipettor manufactured by Brinkman instruments, Inc. Also attached to the support member 26 is another actuator 48 which holds nozzle tool 50. A suitable nozzle tool 50 for use with 96 well microtiter plates would be the eight channel dipensensor/aspirator tool manufactured by Drummond Scientific Co. Nozzle tool 50 is fed by a tube system 52 which is connected to pumps 54, 56 and 58 which are in turn connected to storage bottles 60, 62 and 64. This setup is for dispensing three fluids, although more or less pumps and bottles could be used for more or less fluids. For DNA preparation the first fluid would be a mixture of 50 Mm Glucose, 25 Mm Tris-Cl Ph 8, 10 Mm EDTA Ph 8, and 0.2 N NaOH, 1% SDS. The second fluid would be a mixture of 3 M Potassium, and 5 M Acetate. The third fluid would be Ethanol and a forth fluid would be a TE buffer such as T₁₀E₁ Ph 8.

In lieu of using the nozzle tool 50 to dry the samples, a drying tool 65 can be attached to actuator 49. This drying tool preferably uses a fan to force air through nozzles into the wells containing the samples. Preferably, there is one nozzle for each well so that the entire plate can be dried at one time.

Actuators 36, 42, 46, 48 and 49 are preferably linear drives and stepper motors because of their accuracy and simplicity compared to servo based systems. Servo based systems could, on the other hand, be used with an expected decrease in performance.

Centrifuge well 14 is covered by a lid 66. Lid 66 is slidably mounted on the centrifuge 12 and is moved by a motor drive. Lid 66 slides along tracks 68 and 70. Lid 66 can be made of any metal; plastic or composite capable of absorbing an impact should a piece of the centrifuge become a projectile. One suitable material would be Lexan. The top of lid 66 is used to store various items at a series of locations. Locations 72, 74 and 76 are used to hold microtiter plates 78, 80 and 82. Location 84 is occupied by washing station 86. Location 88 is occupied by pipette tip rack 90.

Microtiter plates 78, 80 and 82 are available in a number of sizes and types. One type preferred for use in DNA preparation is the 96 well, 1 Ml deep well microtiter plate as manufactured by Beckman Instruments. Other plates such as 384 and 864 well plates could also be used. These plates would require modification of the hardware of the device to accommodate the change from 8 wells across to the greater number.

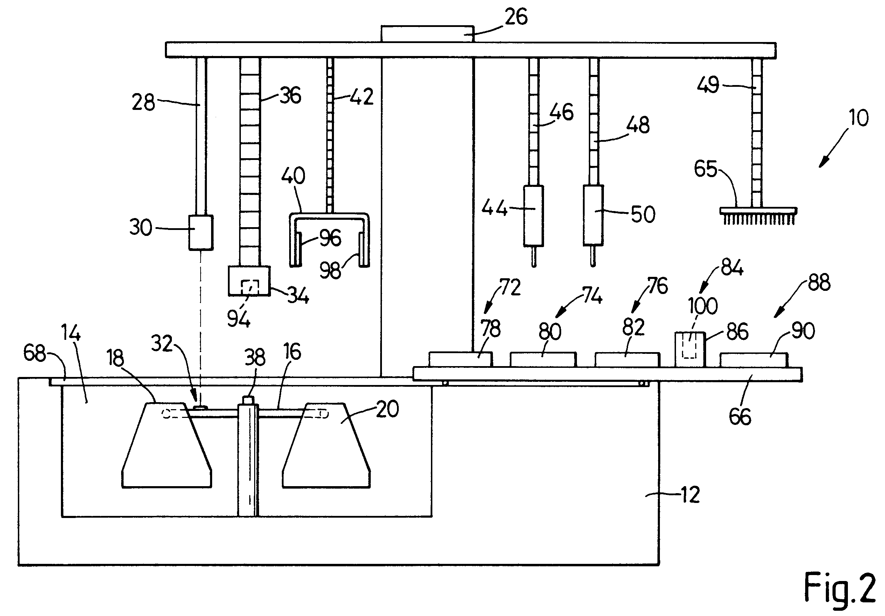

Referring now to FIG. 2, the centrifuge-based device of the present invention is shown and generally designated 10. The elements and numbering correspond to the elements and numbering on FIG. 1. Photo-electric sensor 30 is shown attached to the support member 26 by rod 28. As those skilled in the art can recognize, sensor 30 can also be mounted on a separate support structure if desired for additional stability. It includes a light source which is aimed at the rotor 16. The light travels along a light path 92 which is shown as a dashed line. As noted previously, rotator 34 is attached to the support member 26 by actuator 36. Actuator 36 can extend to engage rotator 34 with rotor nut 38. Rotator 34 has a recess 94 which generally corresponds to the shape of the rotor nut 38. While the foregoing is preferred, it is also possible to use a two axis actuator which would provide both the extension and rotation functions. Moreover, it is also possible to use the centrifuge motor to rotate the rotor in lieu of the rotator 34.

Gripper 40, also connected to support member 26, includes pad 96 and pad 98. Pads 96 and 98 encourage stable gripping of the items held by griper 40. Pads 96 and 98 pad the contact point and also increase the intersurface friction.

Lid 66 has a location 84 which is occupied by washing station 86. Station 86 has a recess accessible by the nozzle tool 50. A washing liquid is circulated through the recess to wash the nozzles of the nozzle tool 50 when the tips are in the recess. Additional recesses can be included in the washing station 86 if addition fluids are desired to be used.

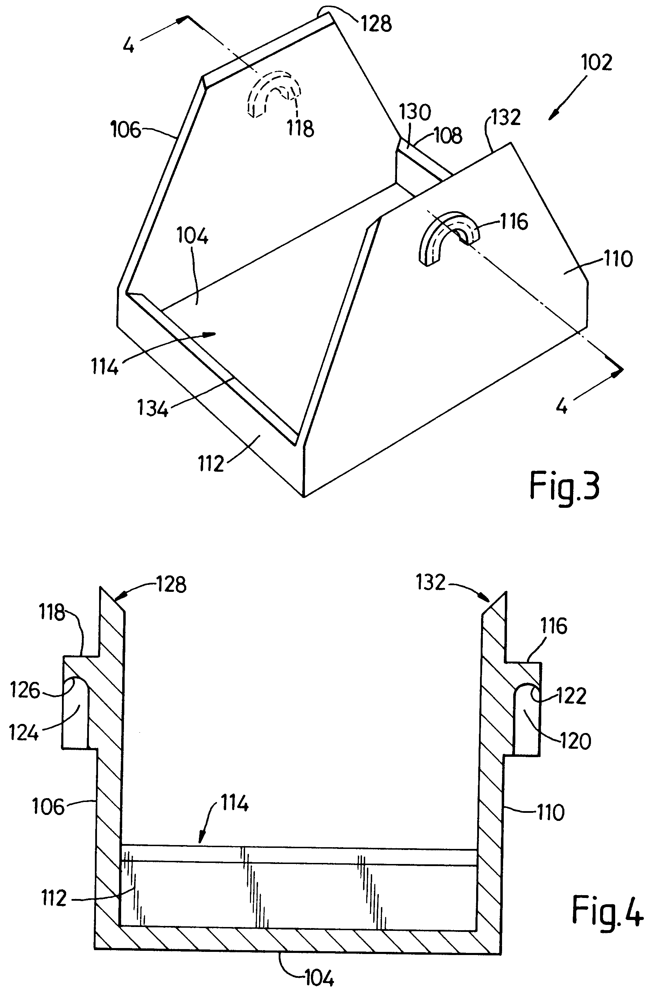

Referring now to FIGS. 3 and 4, a swinging bucket is shown and generally designated 102. Bucket 102 is sized and shaped to hold a microtiter plate during centrifugation. Bucket 102 includes a generally rectangular base 104 and first, second, third and forth upstanding wall members designated 106, 108, 110 and 112, respectively. Base 104 and wall members 106, 108, 110 and 112 define a generally rectangular recess which is generally designated 114. It is preferred that bucket 102 is machined from a single piece of material to minimize stress concentrations associated with bonding or welding points. Aluminum can be used although plastics and composites of sufficient strength could be used as well.

First and third wall members 106 and 110 each support a U-shaped bracket. Bracket 116 is formed onto the outer surface of wall 110 and bracket 118 is formed onto the outer surface of wall 106. Bracket 116 includes a recess 120 between a lip 122 and the side wall. Bracket 118 has a similar recess 124 and lip 126. Edges 128, 130, 132 and 134 are sloped inwardly toward the recess 114 to encourage entry of a plate into the recess 114.

As those skilled in the pertinent art will appreciate, the various locations on lid 66 are in a linear path. This is for purposes of simplicity, namely only a single drive motor need be used to move lid 66. Additional locations could be added by extending lid 66 and its permissible travel. Likewise, additional locations could be added by using a second motor drive to move the lid 66 horizontally along an axis perpendicular to its current axis of movement. Other ways to increase the number of locations includes placing a motor drive between support member 26 and crossbar 136. In this manner, the gripper and tools are moved along the perpendicular axis instead of the lid 66. Gripper 40 could also be directed to stack the plates and the various functions could be performed in series.

A computer is used to control all operations of the device 10. One suitable computer would be an Apple Macintosh IIcx including a nuStep board for 3 axis stepper motor control, a MacAdios (analog to digital converter) board for data acquisition and control arid appropriate software written using computer language such as Think "C" and library board drivers. This configuration would be connected to the various actuators and pumps, the lid motor drive, photo-electric sensor 30, gripper 40, pipetting tool 40, nozzle tool 50 as well as the centrifuge motor, brakes and lid open sensor. As those skilled in the art can appreciate, numerous other hardware and software configurations could be used to accomplish the same result.

### OPERATION

The device is assembled and configured as set forth above. Programming the software to accomplish the following operation is well known in the art and need not be addressed at this time. For purposes of clarity a novel modified method of DNA preparation from bacteria cultures will be explained to show the operation of device 10. Additional steps or variations in fluid handling will be required for yeast (YAC), RNA preparation or isolation of DNA from phages. The operator begins the process by supplying the required fluids as discussed above and by placing two microtiter plates containing the plasmid DNA cultures to be manipulated in locations 72, 74 or 76. The preferred cultures have a viable cell density of approximately 3 x 10⁶ cells per ml. The cultures are placed in every other row of two or four plates leaving clean rows for later use. Alternatively, cultures could be placed in every row of one or two plates with empty plates available to receive transferred fluids.

Once the computer is instructed to begin the process by an operator, the computer activates actuator 36 to engage the rotor nut 38. Rotator 34 turns the rotor 16 until the photoelectric sensor 30 signals the computer that the rotor is in the known orientation and sensor 30 sends the signal that mirror 32 is reflecting the light from the light source to the sensor. The computer, upon receiving the signal, knows the orientation of the rotator and can move the rotor to any other required position. Accordingly, the computer moves the rotor until one of the empty buckets is below the gripper 40. The computer then moves the lid 66 until the first microtiter plate is below the gripper. The gripper is moved to grab the plate and lifts it off of the lid. The lid 66 is then retracted until the empty bucket is exposed to the gripper. Next, the gripper lowers the plate into the bucket and releases the plate. Once the gripper is again above the level of the lid 66, the rotor is moved to position the second empty bucket below the gripper and the process is repeated to place the second plate into the second bucket.

Once the plates are positioned, the lid is moved over the well 14 and the plates are centrifuged at less than 5000g, preferably at approximately 1060g for approximately three minutes. Once the centrifugation is complete, the plates are removed from the buckets and placed on the lid. Next, each row of samples, now separated into a pellet and supernatant, is moved into a position under the nozzle tool 50, where the supernatant is aspirated. Aspiration is accomplished by the computer placing an appropriate row under the nozzle tool, activating the actuator to place the nozzle tips into the wells of the plate and using one or more pumps or a vacuum system to suck the supernatant from the wells. This is repeated until all wells have been aspirated.

Next, the remaining pellets are lysed by adding approximately 150 µL of Solution I (a mixture of 50 Mm Glucose, 25 Mm Tris-Cl Ph 8, 10 Mm EDTA Ph 8, and 0.2 N NaOH, 1% SDS) to each of the wells and mixing the solutions and the pellets. Addition of solution I is achieved by positioning the washing station 86 below the nozzle tool 50. The nozzles are lowered into recess 100. Next, the lines and nozzles are purged by pumping solution I through the lines and nozzles. Once completed, the nozzle tool 50 is retracted and each sample row is placed below the nozzle tool, the nozzle tool is lowered and solution I is dispensed. This is repeated for all sample rows. Each row is mixed by placement below the pipetting tool 44. The pipetting tool is lowered into the wells and mixing is achieved by repeated pipetting. Before the pipetting tool is placed into a row of wells, it retrieves new pipetting tips by placing a row of the pipette tip rack 90 (having clean tips) below the tool. The tool is lowered into the tips and retracted. If tips are already installed, but are contaminated, the rack is positioned with an empty row below the tool and the tips are discarded there. This is repeated for each sample row. Alternatives to repeated pipette mixing include vortexing (vibrating) by vibrating the plate, lowering a vibrating rod into the wells of the plate, or by bubbling air into the wells.

The lysing being complete, 75 µL of solution II (a mixture of 3 M Potassium, and 5 M Acetate) is added to each well having the supernatant and mixing. The procedure is the same as for solution I.

Next, the plates are again moved to the buckets and centrifuged at 1060g for 5 minutes. Thereafter, the plates are removed and again placed on the lids where the next step is to transfer the new supernatant, now containing DNA in suspension, to the clean wells. The supernatant is transferred sample row by sample row by moving a sample row beneath the pipetting tool (having clean or washed tips installed). Next, the pipetting tool removes the supernatant and retracts, an empty row of wells is positioned below the tool, the tool is lowered and the supernatant is expressed. This is repeated for each sample row, with tip changes in between.

Next, The DNA is purified by adding 550 µL of 100% ethanol to each well and mixing. Again the procedure for adding the fluid and mixing is the same as for solution I. The mixture is allowed to sit for 2 minutes and precipitate.

Next, the plates are again moved to the buckets and centrifuged at 1060g for 5 minutes. Thereafter, the plates are removed and again placed on the lids. The next step is to discard the new supernatant leaving the pellet containing the DNA. The procedure is the same as for the first supernatant.

The new pellet is washed by adding 500 µL of at least 70% ethanol to each of the wells. The procedure is the same as for adding solution I. Next the ethanol is aspirated and discarded (as described before) and the pellet is air dried by pumping air through the nozzle tool into the wells.

After drying the pellets, the DNA is resuspended by adding a TE buffer such as T₁₀E₁ Ph 8 or water or other buffers and mixing. The procedure is the same as for Solution I. The plates are left to incubate and become thoroughly resuspended for approximately 10 minutes at which time the isolated and purified DNA is available for use.

The foregoing operation manipulates the samples after having removed the plates from the swinging buckets. Alternatively, by incorporation of an additional drive to move crossbar 136, it would be equally possible to manipulate the samples while still in the buckets.

While the particular automated device for preparation of laboratory materials and method as herein shown and disclosed in detail is fully capable of obtaining the objects and providing the advantages herein before stated, it is to be understood that it is merely illustrative of the preferred embodiments of the invention and that no limitations are intended to the details of construction or design herein shown other than as defined in the appended claims.

## Claims

1. An automated device for preparation of laboratory materials which is characterised by comprising:
a centrifuge having a swinging bucket rotor, said rotor engaging a plurality of swinging buckets containing said materials for centrifuging;
a means for manipulating said materials, said centrifuge and said swinging buckets, said means for manipulating being controlled by a computer;
an automatic feedback means for positioning said swinging bucket rotor to enable manipulation of said materials by said means for manipulating.

2. A device according to claim 1 where said automatic feedback means comprises:
a means for rotating said bucket rotor; and
a means for determining when said rotor is in a specified position.

3. A device according to claim 2 wherein said means for rotating comprises:
an engagable fitting attached to said swinging bucket rotor;
a rotator having a distal end for engaging said fitting, said computer directing said rotator into engagement with said fitting, and said computer activating said rotator to rotate said bucket rotor.

4. A device according to claim 2 or 3 wherein said means for determining comprises a photoelectric cell connected to said computer, said photoelectric cell sending a signal to said computer when said bucket rotor is in said specified position.

5. A device according to claim 4 wherein said means for determining further comprises:
a light source emitting light; and
a mirror attached to said swinging bucket rotor, said mirror reflecting said light to said photoelectric cell when said bucket rotor is in said specified position.

6. A device according to any one of the preceding claims wherein said means for manipulating comprises:
a displacible support member;
an actuator attached to said support member, said actuator being controlled by said computer;
a means for gripping attached to said actuator, said means for gripping engaging a microtiter plate for placement in and removal from at least one of said swinging buckets; and
a motor drive attached to said support member for displacing said support member to allow access to said microtiter plate by said gripper, said motor drive being controlled by said computer.

7. A device according to claim 6 wherein said means for manipulating further comprises:
a means for adding and removing liquids and solids to and from said microtite plate; and
a means for mixing said materials while said materials are held by said microtiter plate.

8. A device according to claim 7 wherein said means for mixing is a pipetting tool controlled by said computer.

9. A device according to claim 7 wherein said means for mixing is a vortexer positioned by an actuator, said actuator being attached between said vortexer and said support member and, said actuator and said vortexer being controlled by said computer.

10. A device according to any one of claims 7 to 9 wherein said means for adding and removing liquids is a plurality of nozzles connected to at least one pump and at least one bottle for containing liquids.

11. An improved method for isolating and purifying plasmid DNA which is characterised by comprising the steps of:
centrifuging a first vessel containing plasmid DNA cultures at no more than 5000g producing a first supernatant and a first pellet, said plasmid DNA cultures comprising a viable cell density of approximately 3 x 10⁶ cell per ml.;
aspirating said first supernatant leaving said first pellet in said first vessel;
lysing said first pellet by adding a solution I to said pellet and mixing said first pellet and solution I, said solution I comprising a mixture of 50 Mm Glucose, 25 Mm Tris-Cl Ph 8, 10 Mm EDTA Ph 8, and 0.2 N NaOH 1% SDS producing a first resulting solution;
adding to said first resulting solution a solution II and mixing said solution II and said first resulting solution, said solution II comprising a mixture of 3 M Potassium, and 5 M Acetate;
centrifuging said first vessel at no more than 5000g producing a second pellet and a second supernatant including said DNA;
transferring said second supernatant to a second vessel;
purifying said DNA by adding Ethanol to said second vessel; then
mixing said second supernatant and said Ethanol to produce a second resulting solution; then
precipitating said second resulting solution; then
centrifuging said second resulting solution at no more than 5000g producing purified DNA in a third pellet and a third supernatant from said second vessel; then
washing said third pellet by adding Ethanol to said second vessel; then
aspirating said Ethanol from said second vessel;
drying said third pellet;
resuspending said purified DNA by adding a TE buffer to said vessel containing said third pellet and mixing third pellet and said TE buffer to produce a third resulting solution of purified DNA in a buffer solution; then
incubating said third solution at room temperature.

12. A method according to claim 11 wherein said centrifuging steps comprise centrifuging at less then 1100g.

13. A method according to claim 11 or 12 wherein said solution I is at room temperature when added to said first pellet in said first vessel.

14. A method according to any one of claims 11 to 13 wherein said mixing steps comprise repeated pipetting.

15. A method according to any one of claims 11 to 13 wherein said mixing steps comprise vortexing of the contents of said vessel.

16. A method according to any one of claims 11 to 15 wherein said solution I is added at the ratio of no more than 300 µL of said solution I to 1 Ml of said plasmid DNA culture.

17. A method according to claim 16 wherein said solution I is added at the ratio of no more than 150 µL of said solution I to 1 Ml of said plasmid DNA culture.

18. A method according to any one of claims 11 to 17 wherein said solution II is added at the ratio of no more than 150 µL of said solution II to 1 Ml of said plasmid DNA culture.

19. A method according to claim 18 wherein said solution II is added at the ratio of no more than 75 µL of said solution II to 1 mL of said plasmid DNA culture.

20. A method according to any one of claims 11 to 19 wherein said Ethanol is added during said purifying step at the ratio of no more than 1100 µL of said Ethanol to 1 mL of said plasmid DNA culture.

21. A method according to claim 20 wherein said Ethanol is added during said purifying step at the ratio of no more than 550 µL of said Ethanol to 1 mL of said plasmid DNA culture.

22. A method according to any one of claims 11 to 19 wherein said Ethanol is added during said washing step at the ratio of no more than 1000 µL of said Ethanol to 1 mL of said plasmid DNA culture.

23. A method according to claim 22 wherein said Ethanol is added during said washing step at the ratio of at least 500 µL of said Ethanol to 1 mL of said plasmid DNA culture.

24. A method according to claim 22 or 23 wherein said Ethanol added at said washing step is 70% Ethanol.

25. A method according to any one of claims 11 to 24 wherein said centrifuging, said aspirating, said adding, said drying, and said incubating steps are automatically performed by a computer controlled device.

26. A method according to any one of claims 11 to 25 wherein said TE buffer is T₁₀E₁ pH 8.
